# EUROPEAN PATENT SPECIFICATION

(11) **EP 3 196 792 B1**
(45) Date of publication and mention of the grant of the patent: **24.11.2021**
(21) Application number: 15841333.6
(22) Date of filing: 13.07.2015
(51) Int. Cl.: G06F 21/32, G06F 21/35, H04L 29/06, H04L 9/08, H04L 9/32, H04W 12/06, H04W 4/02

(54) **BIOMETRIC AUTHENTICATION SYSTEM, BIOMETRIC AUTHENTICATION PROCESSING DEVICE, BIOMETRIC AUTHENTICATION METHOD, BIOMETRIC INFORMATION ACQUISITION TERMINAL, AND INFORMATION TERMINAL**
SYSTEM ZUR BIOMETRISCHEN AUTHENTIFIZIERUNG, VORRICHTUNG ZUR BIOMETRISCHEN AUTHENTIFIZIERUNG, VERFAHREN ZUR BIOMETRISCHEN AUTHENTIFIZIERUNG, ENDGERÄT ZUR ERFASSUNG BIOMETRISCHER INFORMATIONEN UND INFORMATIONSENDGERÄT
SYSTÈME, DISPOSITIF DE TRAITEMENT ET PROCÉDÉ D'AUTHENTIFICATION BIOMÉTRIQUE, TERMINAL D'ACQUISITION D'INFORMATIONS BIOMÉTRIQUES ET TERMINAL D'INFORMATIONS

(30) Priority: 16.09.2014 JP 2014187209
(43) Date of publication of application: 26.07.2017
(73) Proprietor: Hitachi, Ltd., Tokyo 100-8280 (JP)
(72) Inventor: YAMAZAKI, Hiroki, Tokyo 100-8280 (JP); KITANE, Keiji, Tokyo 100-8280 (JP); INOUE, Takeshi, Tokyo 100-8280 (JP); FUKUSHIMA, Shinichirou, Tokyo 100-8280 (JP); HIGAKI, Hiroyuki, Tokyo 100-8280 (JP)
(74) Representative: Mewburn Ellis LLP
(86) International application number: PCT/JP2015/070067
(87) International publication number: WO 2016/042900

(56) References cited:
- JP-A- 2006 106 827
- JP-A- 2007 066 107
- JP-A- 2011 198 260
- JP-A- 2012 073 796
- JP-A- 2013 109 619
- US-A1- 2008 223 926
- US-A1- 2010 022 254
- US-A1- 2012 268 241

## Description

### [Technical Field]

The present invention relates to a biometric authentication system, a biometric authentication processing apparatus, a biometric authentication method, a biometric information acquisition terminal, and an information terminal.

### [Background Art]

1:N biometric authentication, which uses biometric information such as a finger vein pattern or a fingerprint, has come to be used in recent years.

To achieve a biometric authentication apparatus capable of biometric authentication that is secure yet simple and speedy, Patent Literature 1 discloses a biometric authentication apparatus that includes: a one-to-one authenticating unit that, in response to transmission of biometric information with an ID number, acquires biometric information associated with the ID number from a user database, checks the transmitted biometric information against the acquired biometric information, and when they match, concludes that the transmitted biometric information is successfully authenticated; a biometric-information transferring unit that, when the one-to-one authenticating part successfully has authenticated the transmitted biometric information, transfers the information associated with the ID number in the user database to a visitor database; and a one-to-N authenticating unit that, when biometric information is transmitted thereto without an ID number, sequentially acquires biometric information stored in the visitor database, checks the transmitted biometric information against each biometric information thus acquired, and when there is at least one match, concludes that the transmitted biometric information is successfully authenticated.

### [Citation List]

### [Patent Literature]

[PTL 1] Japanese Patent Application Publication No. 2007-299214
[PTL 2] US Patent Application Publication No. US 2010/0022254 A1 discloses location-based authentication of mobile device transactions

### [Summary of Invention]

### [Technical Problem]

In 1:N authentication, the larger the value of N, the higher the risk of false recognition. Thus, 1:N authentication faces an issue of how to reduce the value of N from the total number of users.

In the method disclosed in Patent Literature 1, one-to-one authentication involving a user ID has to be performed first. Patent Literature 1 therefore does not disclose a method that saves a user from having to operate a terminal to input their ID. Further, Patent Literatures 1 does not disclose a case where an ID is transmitted on a communication channel different from that on which biometric information is transmitted. Patent Literature 1, in which a user who has not passed 1:1 authentication is excluded from 1:N authentication, does not disclose a method that supports a case where entrance and exit may not be strictly managed, such as a shopping mall.

In view of the above, the present invention aims to provide a highly-secure yet convenient 1:N biometric authentication system using a combination of wireless communication by an information terminal, such as a smartphone, and biometric information acquired by a biometric information acquisition terminal.

### [Solution to Problem]

The present invention is defined in the appended independent claims.

### [Advantageous Effects of Invention]

The present invention can provide a secure yet convenient biometric authentication system, in which a user of a service that requires authentication processing can receive the service simply by carrying an information terminal with a wireless communication function and presenting biometric information, without entry of an ID or presentation of an ID card.

Problems, configurations, and advantageous effects other than the ones given above will become apparent by way of an embodiment described below.

### [Brief Description of Drawings]

[Fig. 1] Fig. 1 is a diagram illustrating an example of a biometric authentication system.
[Fig. 2] Fig. 2 is a diagram illustrating an example of the functional configuration of a biometric authentication server.
[Fig. 3A] Fig. 3A is a diagram illustrating an example of the functional configuration of a biometric information acquisition terminal.
[Fig. 3B] Fig. 3B is a diagram illustrating an example of the functional configuration of an information terminal.
[Fig. 3C] Fig. 3C is a diagram illustrating an example of the functional configuration of a beacon.
[Fig. 4A] Fig. 4A is a diagram illustrating an example of information stored in a biometric reference information retention part.
[Fig. 4B] Fig. 4B is a diagram illustrating an example of information stored in a biometric information acquisition terminal location information retention part.
[Fig. 4C] Fig. 4C is a diagram illustrating an example of information stored in an information terminal location information retention part.
[Fig. 5] Fig. 5 is a diagram illustrating an example of processing performed by the biometric authentication system.
[Fig. 6] Fig. 6 is a diagram illustrating an example of processing performed by the biometric authentication system.
[Fig. 7] Fig. 7 is a diagram illustrating an example of processing performed by the biometric authentication system.
[Fig. 8] Fig. 8 is a diagram illustrating an example of processing performed by the biometric authentication system.
[Fig. 9] Fig. 9 is a diagram illustrating an example of processing performed by the biometric authentication system.
[Fig. 10] Fig. 10 is a diagram illustrating an example of processing performed by the biometric authentication system.
[Fig. 11] Fig. 11 is a diagram illustrating an example of the functional configurations of the biometric information acquisition terminal and the information terminal.

### [Description of Embodiments]

An embodiment of the present invention is described below using the drawings. Descriptions are given of specific examples of processing needed to provide a highly-secure yet convenient 1:N biometric authentication system which uses a combination of wireless communication by an information terminal and biometric information acquired by a biometric information acquisition terminal.

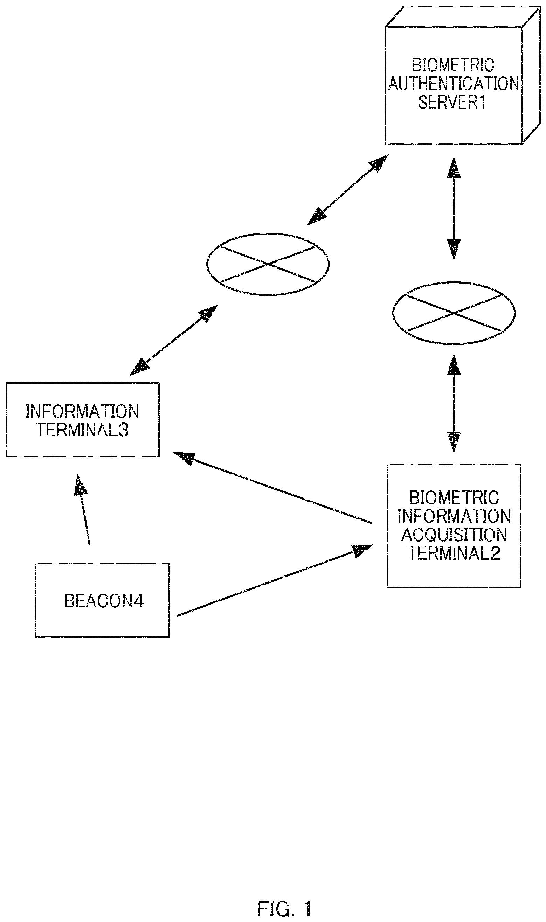

Fig. 1 is a diagram showing an example of a biometric authentication system. In a biometric authentication system according to the present invention, a biometric authentication server 1 and a biometric information acquisition terminal 2 are communicatively coupled to each other. The biometric authentication server 1 is also communicatively coupled to an information terminal 3. The information terminal 3 can receive communications from a beacon 4 or the biometric information acquisition terminal 2. These may be coupled to one another by channels not shown in Fig. 1.

The biometric authentication server 1 is a server that communicates with the biometric information acquisition terminal 2 and the like via networks or the like. For example, the biometric authentication server 1 may be a server that performs predetermined processing related to biometric authentication. Other applications may be operated on the biometric authentication server 1. The functions of the biometric authentication server 1 may be distributed among multiple devices in separate casings, such as servers, storages, and the like, which work in cooperation.

The biometric information acquisition terminal 2 is a terminal having functions such as a biometric information acquisition function to acquire biometric information, a display function to enable display of information, an input function to enable input of information, a communication function to enable communications with other apparatuses and devices, and a control function to enable computation on information. The main role of the biometric information acquisition terminal 2 is to acquire biometric information, send the biometric information to the biometric authentication server 1, and receive an authentication result from the biometric authentication server 1. The biometric authentication system may include more than one biometric information acquisition terminal 2. Examples of the biometric information acquisition terminal 2 include, but are not limited to, a cash register at a store or elsewhere, a tablet, a smartphone, a personal computer, and a thin client terminal.

The information terminal 3 is a terminal having functions such as a display function to enable display of information, an input function to enable input of information, a communication function to enable communications with other apparatuses and devices, and a control function to enable computation on information. The main role of the information terminal 3 is to send the biometric authentication server 1 information uniquely associated with a user. The biometric authentication system includes multiple information terminals 1. Examples of the information terminal 1 include, but are not limited to, a smartphone, a tablet terminal, and a wearable terminal.

The beacon 4 is an apparatus having functions such as a beacon broadcast function to send ID information and the like by radio waves at predetermined intervals . The beacon 4 is installed at a predetermined location, and its main role is to notify the biometric information acquisition terminal 2 and the information terminal 3 of location-related information. Examples of the beacon 4 include, but are not limited to, apparatuses that emit radio waves of close-range communication or proximity communication, such as Bluetooth Low Energy (registered trademark), a wireless LAN (Local Area Network), Zigbee (registered trademark), or NFC (Near Field Communication). As will be described later in detail, the role of the beacon 4 may be played by the biometric information acquisition terminal 2.

The communications between the biometric information acquisition terminal 2 and the biometric authentication server 1 may be conducted using, for example, wireless communications such as LTE (Long Term Evolution), 3G (3rd Generation), WiMAX (Worldwide Interoperability for Microwave Access) (registered trademark), a wireless LAN (Local Area Network), or WAN (Wide Area Network), or using wired communications such as wired LAN, the Internet, or communications using dedicated lines.

The communications between the information terminal 3 and the biometric authentication server 1 may be conducted using, for example, wireless communications such as LTE, 3G, WiMAX (registered trademark), a wireless LAN, or WAN, or using wired communications such as wired LAN, the Internet, or communications using dedicated lines.

The communications between biometric information acquisition terminal 2 and the biometric authentication server 1 and the communications between the information terminal 3 and the biometric authentication server 1 may be conducted over different communication networks or the same network.

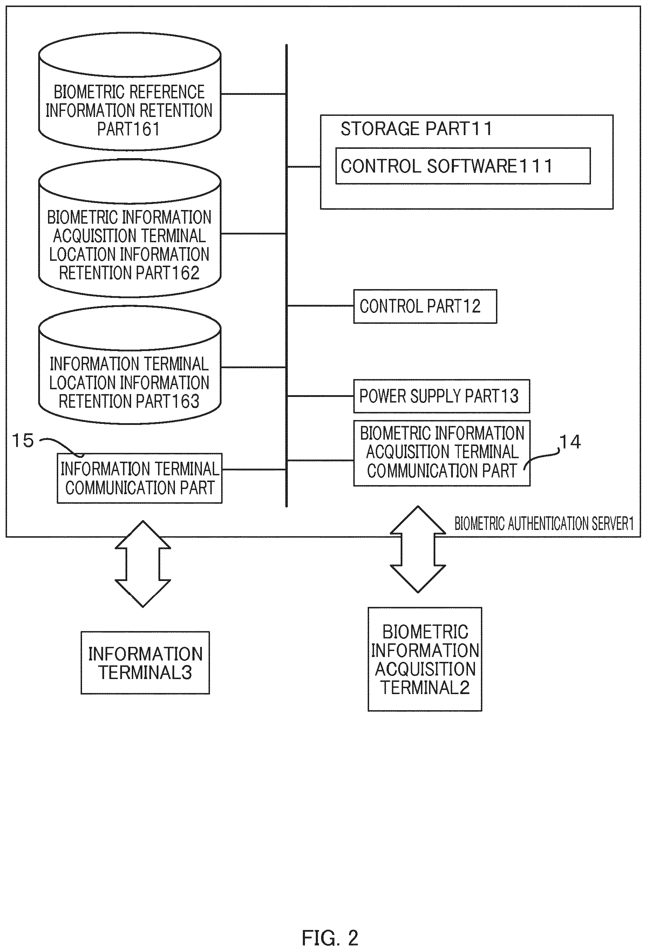

Fig. 2 is a diagram illustrating an example of the functional configuration of the biometric authentication server 1.

The biometric authentication server 1 includes, for example, a storage part 11, a control part 12, a power supply part 13, a biometric information acquisition terminal communication part 14, an information terminal communication part 15, a biometric reference information retention part 161, a biometric information acquisition terminal location information retention part 162, and an information terminal location information retention part 163, with these coupled to one another by buses. Although the modules are depicted in Fig. 2 as being physically coupled to one another inside the biometric authentication server 1, they do not necessarily have to be coupled via buses. The modules may be coupled electrically by other means, or only modules that need to be coupled may be coupled. Further, the modules in separate casings may be electrically combined.

The storage part 11 is configured of a memory incorporated in the biometric authentication server 1, a removable external memory, or the like, and stores various types of information. The storage part 11 stores, for example, operation control programs executed by the control part 12. The storage part 11 has control software 111. The control software 111 may be a series of processing triggered by the start of communications with the biometric information acquisition terminal 2 or the information terminal 3, or a series of processing started by a predetermined timer or other interruption handling. The control software 111 may be composite software including multiple sets of software that are linked. In the present invention, a statement that the control software 111 executes processing means, unless otherwise noted, that physically, the control part 12 executes the processing following programs described in the control software 111.

The control part 12 is configured of a CPU (Central Processing Unit), an MPU (Micro Processing Unit), a DSP (Digital Signal Processor), or the like, and controls the overall operation of the biometric authentication server 1 by, for example, executing predetermined operation control programs.

The power supply part 13 is configured of a battery, an AC adapter, a charging circuit, and the like. The power supply part 13 performs power supply to the parts of the biometric authentication server 1, and charging of the battery. The power supply part 13 may also perform status checking, such as whether the biometric authentication server 1 is being powered by the battery or powered by the AC adapter, and checking of the remaining battery charge.

The biometric information acquisition terminal communication part 14 is a function to enable the biometric authentication server 1 to communicate with the biometric information acquisition terminal 2, and may be a module for performing wireless communications using LTE, 3G, WiMAX (registered trademark), wireless LAN, WAN, or the like, or communications using wired LAN, the Internet, or dedicated lines . The biometric information acquisition terminal communication part 14 may be the same module as the information terminal communication part 15 to be described below. The biometric authentication server 1 may have more than one biometric information acquisition terminal communication part 14 for different communication methods and the like.

The information terminal communication part 15 is a function to enable the biometric authentication server 1 to communicate with the information terminal 3, and may be a module for performing wireless communications such as LTE, 3G, WiMAX (registered trademark), wireless LAN, or WAN, or communications using wired LAN, the Internet, or dedicated lines. The biometric authentication server 1 may have more than one information terminal communication part 15 for different communication methods and the like.

The biometric information acquisition terminal communication part 14 and the information terminal communication part 15 may be the same module, or may also be used by another module used for communications for a different purpose.

The communication functions provided by the biometric information acquisition terminal communication part 14 and the information terminal communication part 15 may include an antenna and a modem circuit or the like if they perform wireless communications and may include a connector and a modem circuit or the like if they perform wired communications. Each of the biometric information acquisition terminal communication part 14 and the information terminal communication part 15 may be configured to support multiple communication methods.

The biometric reference information retention part 161 is a functional element for associating and storing the IDs of the information terminals 3 owned by respective users and biometric reference information acquired from biological objects of the respective users. The biological reference information may be a template obtained by extraction of an image or a feature of biometric information, such as a vein pattern, a fingerprint, a palm, an iris, a voice, or a face. The biometric reference information retention part 161 may be means for retaining data, such as a table, a database, a hash structure, or KVS (Key Value Store), in which to store predetermined information. An example of data retained by the biometric reference information retention part 161 will be given later.

The biometric information acquisition terminal location information retention part 162 is a functional element for storing therein location information on each of the biometric information acquisition terminals 2. The location information may be, for instance, a beacon ID to be described later, or information based on GPS (Global Positioning System), IMES (Indoor MEssaging System), or the like. The biometric information acquisition terminal location information retention part 162 may be means for retaining data, such as a table, a database, a hash structure, or KVS (Key Value Store), in which to store predetermined information. An example of data retained by the biometric information acquisition terminal location information retention part 162 will be given later.

The information terminal location information retention part 163 is a functional element for storing therein location information on each of the information terminals 3. The location information may be, for instance, a beacon ID to be described later, or information based on GPS, IMES, or the like. The information terminal location information retention part 163 may be means for retaining data, such as a table, a database, a hash structure, or KVS (Key Value Store), in which to store predetermined information. An example of data retained by the information terminal location information retention part 163 will be given later.

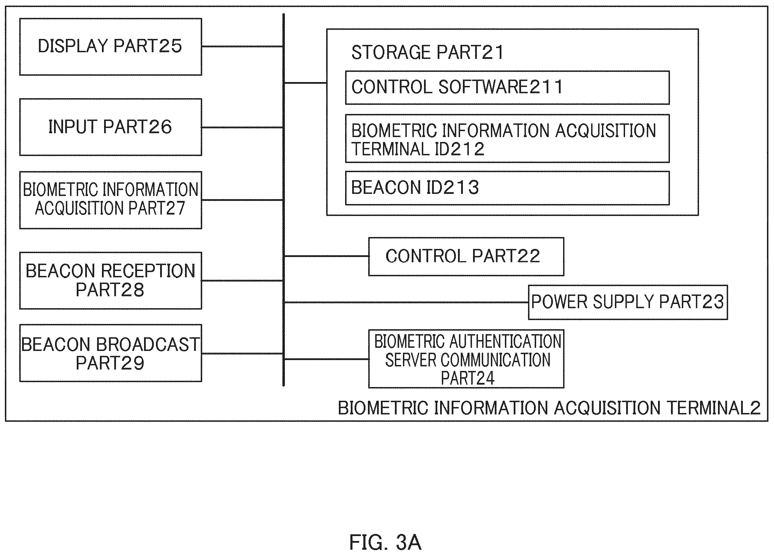

Figs. 3A to 3C are diagrams illustrating examples of the functional configurations of the biometric information acquisition terminal 2, the information terminal 3, and the beacon 4, respectively.

The biometric information acquisition terminal 2 includes, for example, a storage part 21, a control part 22, a power supply part 23, a biometric authentication server communication part 24, a display part 25, an input part 26, a biometric information acquisition part 27, a beacon reception part 28, and a beacon broadcast part 29, with these coupled to one another by buses. Although the modules are depicted in Fig. 3A as being physically coupled to one another inside the biometric information acquisition terminal 2, they do not necessarily have to be coupled via buses . The modules may be coupled electrically by other means, or only modules that need to be coupled may be coupled. Further, the modules in separate casings may be electrically combined.

The storage part 21 is configured of a memory incorporated in the biometric information acquisition terminal 2, a removable external memory, or the like, and stores various types of information. The storage part 21 stores, for example, operation control programs executed by the control part 22.

The storage part 21 has, in one example, control software 211, a biometric information acquisition terminal ID 212, and a beacon ID 213. The control software 211 may have described therein software for controlling the biometric information acquisition terminal 2, and may be a series of processing started by an input from the input part 26 or a predetermined input from the beacon reception part 28 or by a predetermined timer or other interruption handling. The control software 211 may be composite software including multiple sets of software that are linked. In the present invention, a statement that the control software 211 executes processing means, unless otherwise noted, that physically, the control part 22 executes the processing following programs described in the control software 211.

The biometric information acquisition terminal ID 212 is ID information for the biometric authentication server 1 to use in uniquely identifying the biometric information acquisition terminal 2 among the multiple biometric information acquisition terminals 2 in the biometric authentication system. The biometric information acquisition terminal ID 212 may be any data as long as it is consistent within the entire biometric authentication system. The biometric information acquisition terminal ID 212 may be preset information, information generated by the control software 211, ID information on the hardware or the like of the biometric information acquisition terminal 2, or an ID notified of as the biometric information acquisition terminal ID 212 by the biometric authentication server 1 or the like in advance.

The beacon ID 213 is ID information broadcasted by the beacon broadcast part 29 using close-range wireless communication, and is an ID by which the biometric information acquisition terminal 2 informs other constituents of location-related information. Alternatively, ID information received by the beacon reception part 28 (described later) using close-range wireless communication may be dynamically stored in the beacon ID 213. The beacon ID 213 is ID information for the biometric authentication server 1 to use in identifying the location of a certain apparatus . The beacon ID 213 may be any data as long as it is consistent within the entire biometric authentication system. The biometric information may be preset information, information generated by the control software 211, ID information on the hardware or the like of the biometric information acquisition terminal 2, or an ID notified of as the beacon ID 213 by the biometric authentication server 1 or the like in advance. If necessary, the biometric information acquisition terminal 2 may have multiple beacon IDs. Instead of beacon IDs, other location information may be stored in the beacon ID 213, such as information based on GPS or IMES.

The control part 22 is configured of a CPU, an MPU, a DSP, or the like, and controls the overall operation of the biometric information acquisition terminal 2 by, for example, executing predetermined operation control programs.

The power supply part 23 is configured of a battery, an AC adapter, a charging circuit, and the like. The power supply part 23 performs power supply to the parts of the biometric information acquisition terminal 2, and charging of the battery. The power supply part 23 may also perform status checking, such as whether the biometric information acquisition terminal 2 is being powered by the battery or powered by the AC adapter, and checking of the remaining battery charge.

The biometric authentication server communication part 24 is a function to enable the biometric information acquisition terminal 2 to communicate with the biometric authentication server 1 and the like, and may be a module for performing wireless communications using LTE, 3G, WiMAX (registered trademark), wireless LAN, WAN, or the like, or communications using wired LAN, the Internet, or dedicated lines. The biometric information acquisition terminal 2 may have more than one biometric authentication server communication part 24 for different communication methods and the like. The biometric authentication server communication part 24 may be used by another module used for communications for a different purpose. The biometric authentication server communication part 24 may include an antenna and a modem circuit or the like if it performs wireless communications and may include a connector and a modem circuit or the like if it performs wired communications. The biometric authentication server communication part 24 may be configured to support multiple communication methods.

The display part 25 is configured of a panel, such as a liquid crystal display, an organic EL (Electro-Luminescence) display, or an electronic paper display, a driver circuit, and the like, and displays any given information (such as text, still images, or video images) as controlled by the control part 22. For example, the display part 25 may display a result of biometric authentication. The display part 25 may include multiple display devices for displaying different pieces of information.

The input part 26 includes at least one of a touch panel, buttons, a keyboard, a mouse, a cursor key, number keys, and the like. The input part 26 receives operational inputs by a user and inputs, to the control part 22, input signals indicative of the operational inputs. In a case like a touch panel, the display part 25 and the input part 26 may be integrated. The input part 26 may also generate input signals upon voice recognition, image recognition, gesture recognition, and the like, and inputs the input signals to the control part 22.

The biometric information acquisition part 27 includes a device that acquires data on an image or a voice signal, or a feature extracted therefrom, of biometric information which is at least one of a vein pattern, a fingerprint, a palm, an iris, a voice, a face, and the like, and the biometric information acquisition part 27 inputs the data to the control part 22. The biometric information acquisition part 27 may start the data acquisition operation upon detection of a biological object or upon an input from the input part 26. The biometric information acquisition terminal 2 may have more than one biometric information acquisition part 27.

The beacon reception part 28 is a function to receive close-range radio waves emitted by the beacon 4 and the like, and receives radio waves of close-range communication or proximity communication, such as Bluetooth Low Energy (registered trademark), a wireless LAN, Zigbee (registered trademark), or NFC. The beacon reception part 28 may have a function to acquire the radio field intensity or information on the distance from the radio source. The beacon reception part 28 is mainly configured to enable the biometric information acquisition terminal 2 to acquire location information. If there is no need for the biometric information acquisition terminal 2 to acquire location information from the beacon reception part 28, the beacon reception part 28 may be omitted. The beacon reception part 28 may be functionally configured to receive GPS or IMES information as the location information.

The beacon broadcast part 29 is a function to broadcast radio waves using close-range wireless communication, and receives radio waves of close-range communication or proximity communication, such as Bluetooth Low Energy (registered trademark), a wireless LAN, Zigbee (registered trademark), or NFC. The beacon broadcast part 29 is mainly configured to enable the biometric information acquisition terminal 2 to give a notification of location-related information to the other constituents of the biometric authentication system. If there is no need for the biometric information acquisition terminal 2 to notify the other constituents of location-related information, the beacon broadcast part 29 may be omitted. The beacon reception part 28 may be functionally configured to transmit radio waves compatible with GPS or IMES information as the location-related information.

The beacon reception part 28 and the beacon broadcast part 29 may be configured to share the same module. In the above-described cases where the beacon reception part 28 and the beacon broadcast part 29 are unnecessary, one or both of the beacon reception part 28 and the beacon broadcast part 29 may be omitted.

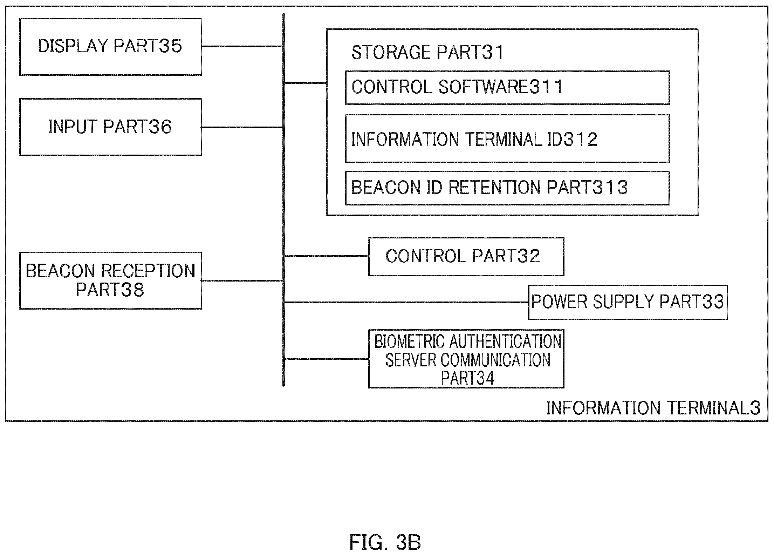

The information terminal 3 includes, for example, a storage part 31, a control part 32, a power supply part 33, a biometric authentication server communication part 34, a display part 35, an input part 36, and a beacon reception part 38, with these coupled to one another with buses. Although the modules are depicted in Fig. 3B as being physically coupled to one another inside the information terminal 3, they do not necessarily have to be coupled via buses . The modules may be coupled electrically by other means, or only modules that need to be coupled may be coupled. Further, the modules in separate casings may be electrically combined.

The storage part 31 is configured of a memory incorporated in the information terminal 3, a removable external memory, or the like, and stores various types of information. The storage part 31 stores, for example, operation control programs executed by the control part 32.

The storage part 31 has, in one example, control software 311, an information terminal ID 312, and a beacon ID retention part 313. The control software 311 may have described therein software for controlling the information terminal 3, and may be a series of processing started by an input from the input part 36 or a predetermined input from the beacon reception part 38 or by a predetermined timer or other interruption handling. The control software 311 may be composite software including multiple sets of software that are linked. In the present invention, a statement that the control software 311 executes processing means, unless otherwise noted, that physically, the control part 32 executes the processing following programs described in the control software 311.

The information terminal ID 312 is ID information for the biometric authentication server 1 to use in uniquely identifying the information terminal 3 among the multiple information terminals 3 in the biometric authentication system. The information terminal ID 312 may be any data as long as it is consistent within the entire biometric authentication system. The information terminal ID 312 may be preset information, information generated by the control software 311, ID information on the hardware or the like of the information terminal 3, or an ID notified of as the information terminal ID 312 by the biometric authentication server 1 or the like in advance.

The beacon ID retention part 313 stores ID information received from the beacon reception part 28 (described later) using close-range wireless communication. If necessary, the information terminal 3 may include more than one beacon ID retention part 313. The beacon ID retention part 313 may store other types of location information, such as GPS or IMES information.

The control part 32 is configured of a CPU, an MPU, a DSP, or the like, and controls the overall operation of the information terminal 3 by, for example, executing predetermined operation control programs.

The power supply part 33 is configured of a battery, an AC adapter, a charging circuit, and the like. The power supply part 33 performs power supply to the parts of the information terminal 3, and charging of the battery. The power supply part 33 may also perform status checking, such as whether the information terminal 3 is being powered by the battery or powered by the AC adapter, and checking of the remaining battery charge.

The biometric authentication server communication part 34 is a function to enable the information terminal 3 to communicate with the biometric authentication server 1 and the like, and may be a module for performing wireless communications using LTE, 3G, WiMAX (registered trademark), wireless LAN, WAN, or the like, or communications using wired LAN, the Internet, or dedicated lines . The information terminal 3 may have more than one biometric authentication server communication part 34 for different communication methods or the like. The biometric authentication server communication part 34 may be used by another module used for communications for a different purpose. The biometric authentication server communication part 34 may include an antenna and a modem circuit or the like if it performs wireless communications and may include a connector and a modem circuit or the like if it performs wired communications. The biometric authentication server communication part 34 may be configured to support multiple communication methods.

The display part 35 is configured of a panel, such as a liquid crystal display, an organic EL display, or an electronic paper display, a driver circuit, and the like, and displays any given information (such as text, still images, or video images) as controlled by the control part 32. The display part 35 may include multiple display devices for displaying different pieces of information.

The input part 36 includes at least one of a touch panel, buttons, a keyboard, a mouse, a cursor key, number keys, and the like. The input part 36 receives operational inputs by a user and inputs, to the control part 32, input signals indicative of the operational inputs. In a case like a touch panel, the display part 35 and the input part 36 may be integrated. The input part 36 may also generate input signals upon voice recognition, image recognition, gesture recognition, and the like, and inputs the input signals to the control part 32.

The beacon reception part 38 is a function to receive close-range radio waves emitted by the beacon 4, the biometric information acquisition terminal 2, and the like, and receives radio waves of close-range communication or proximity communication, such as Bluetooth Low Energy (registered trademark), a wireless LAN, Zigbee (registered trademark), or NFC. The beacon reception part 38 may have a function to acquire the radio field intensity or information on the distance from the radio source. The beacon reception part 38 is mainly configured to enable the information terminal 3 to acquire location-related information. If there is no need for the information terminal 3 to acquire location-related information from the beacon reception part 38, the beacon reception part 38 may be omitted. The beacon reception part 38 may be functionally configured to receive GPS or IMES information as the location-related information.

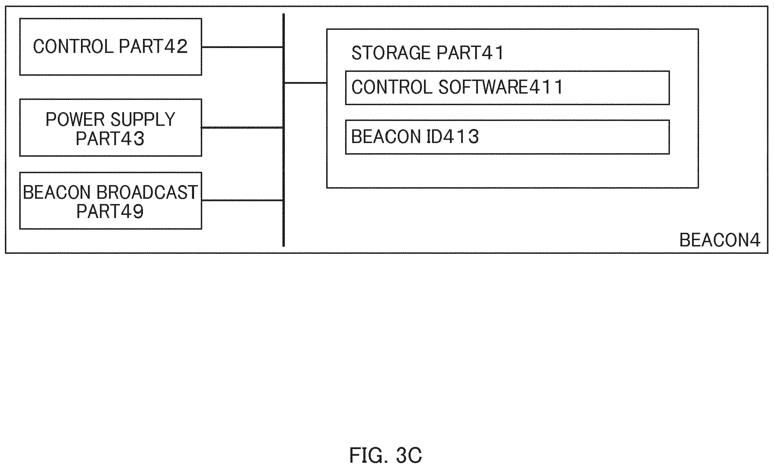

The beacon 4 includes, for example, a storage part 41, a control part 42, a power supply part 43, and a beacon broadcast part 49, with these being coupled to one another by buses. Although the modules are depicted in Fig. 3C as being physically coupled to one another inside the beacon 4, they do not necessarily have to be coupled via buses. The modules may be coupled electrically by other means, or only modules that need to be coupled may be coupled. Further, the modules in separate casings may be electrically combined.

The storage part 41 is configured of a memory incorporated in the beacon 4, a removable external memory, or the like, and stores various types of information. The storage part 41 stores, for example, operation control programs executed by the control part 42.

The storage part 41 has, for example, control software 411 and a beacon ID 413. The control software 411 may have described therein software for controlling the beacon 4, and may be a series of processing started by a predetermined timer or other interruption handling. The control software 411 may be composite software including multiple sets of software that are linked. In the present invention, a statement that the control software 411 executes processing means, unless otherwise noted, that physically, the control part 42 executes the processing following programs described in the control software 411.

The beacon ID 413 is ID information broadcasted by the beacon broadcast part 49 (described later) using close-range wireless communication, and is an ID for the beacon 4 to use in informing the other constituents of location-related information. The beacon ID 413 is ID information for the biometric authentication server 1 to use in identifying the location of a certain apparatus . The beacon ID 413 may be any data as long as it is consistent within the entire biometric authentication system. The beacon ID 413 may be preset information, information generated by the control software 411, ID information on the hardware or the like of the beacon 4, or an ID notified as the beacon ID 413 of by the biometric authentication server 1 or the like in advance. If necessary, the beacon 4 may have more than one beacon ID 413. Instead of a beacon ID, other location-related information may be stored, such as information compatible with GPS or IMES.

The control part 42 is configured of a CPU, an MPU, a DSP, or the like, and controls the overall operation of the information terminal 3 by, for example, executing predetermined operation control programs.

The power supply part 43 is configured of a battery, an AC adapter, a charging circuit, and the like. The power supply part 43 performs power supply to the parts of the beacon 4, and charging of the battery. The power supply part 43 may also perform status checking, such as whether the beacon 4 is being powered by the battery or powered by the AC adapter, and checking of the remaining battery charge.

The beacon broadcast part 49 is a function to broadcast short-range radio waves, and receives radio waves of close-range communication or proximity communication, such as Bluetooth Low Energy (registered trademark), a wireless LAN, Zigbee (registered trademark), or NFC.

The beacon 4 is configured to notify the other constituents of location-related information. If there is no need for the beacon 4 to notify the other constituents of location-related information, the beacon 4 may be omitted. For example, if the role of the beacon 4 is played by the biometric information acquisition terminal 2, the independent beacon 4 may be omitted from the biometric authentication system. Moreover, the beacon 4 may be configured to broadcast radio waves compatible with GPS or IMES information serving as the location-related information.

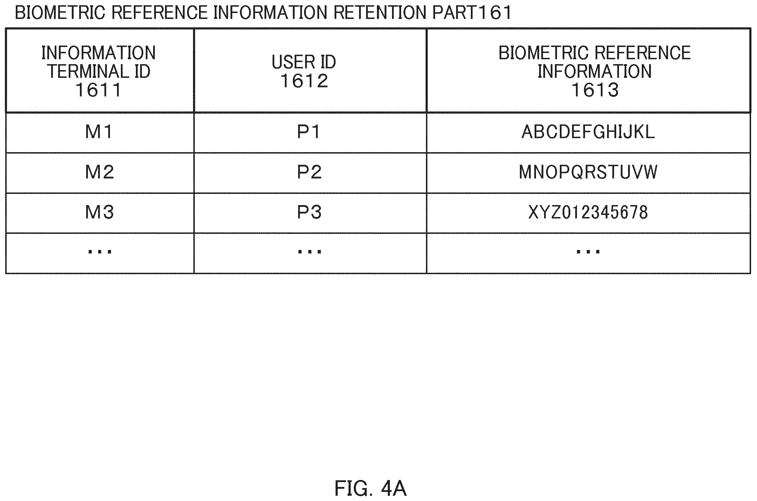

Figs. 4A to 4C show example configurations of the biometric reference information retention part 161, the biometric information acquisition terminal location information retention part 162, and information terminal location information retention part 163 of the biometric authentication server 1, respectively.

The biometric reference information retention part 161 associates and stores the information terminal ID 312 of the information terminal 3 associated with an individual user, the user ID of the individual user, and biometric reference information on the individual user. The biometric reference information retention part 161, as an example of a configurational element for retaining such an association, has an information terminal ID 1611, a user ID 1612, and a biometric reference information 1613. Data stored in the information terminal ID 1611 are the information terminal IDs 312 of the respective information terminals 3 in the biometric authentication system. Data stored in the user ID 1612 are IDs associated with the individuals owning the information terminals 3 which are identified by the information terminal IDs 312. These individuals are the targets of authentication by the biometric authentication system of the present invention. Data stored in the biometric reference information 1613 may be templates for use in authentication of biometric information acquired from biometric objects of the individuals. If necessary, more than one type of template may be stored. In the first entry of the example shown in Fig. 4A, an information terminal ID "M1", a user ID "P1", and "ABCDEFGHIJKL" as a data string indicating the biometric reference information on the corresponding user are associated with one another. Fig. 4A also shows that M2 is associated with P2 and with the biometric information on the individual identified by P2, and that M3 is associated with P3 and with the biometric information on the individual identified by P3.

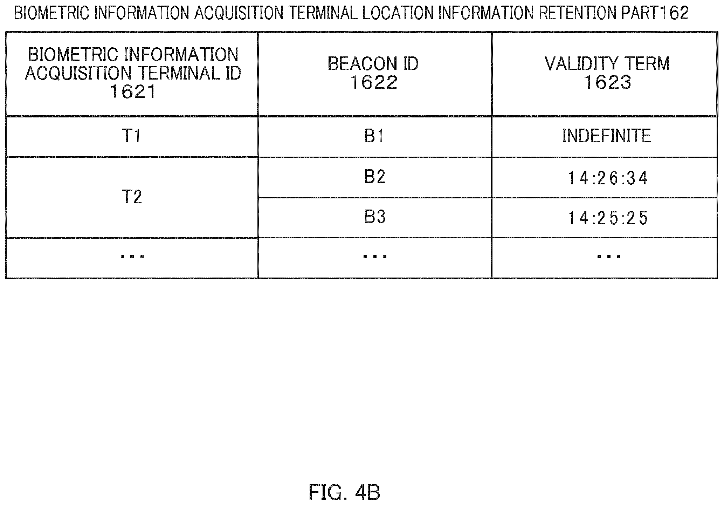

The biometric information acquisition terminal location information retention part 162 associates and stores, for example, the biometric information acquisition terminal ID 212, a beacon ID, and a validity term of the corresponding entry. The biometric information acquisition terminal location information retention part 162, as an example of a configuration element for storing such an association, has a biometric information acquisition terminal ID 1621, a beacon ID 1622, and a validity term 1623. Data stored in the biometric information acquisition terminal ID 1621 are the biometric information acquisition terminal IDs 212 of the respective biometric information acquisition terminals 2 in the biometric authentication system. Data stored in the beacon ID 1622 are data indicating the locations of the biometric information acquisition terminals 2 identified by the biometric information acquisition terminal IDs 212. If the beacon 4 and the biometric information acquisition terminal 2 are both fixed at predetermined locations, the beacon ID 413 of the beacon 4 installed near the biometric information acquisition terminal 2 may be statically stored as the beacon ID 1622 for the biometric information acquisition terminal 2. Alternatively, if the beacon 4 is fixed and the biometric information acquisition terminal 2 is mobile, the biometric information acquisition terminal 2 sends the beacon ID 413 received from the beacon 4 to the biometric authentication server 1, and the biometric authentication server 1 then updates the association dynamically. A detailed flowchart will be described later in this regard. Alternatively, if the biometric information acquisition terminal 2 is configured to broadcast beacons, the beacon ID 213 broadcasted by the biometric information acquisition terminal 2 is statically stored in the beacon ID 1622. Data stored in the validity term 1623 indicates the term of validity of the entry. Data stored as the validity term may be the time of expiration, a count number to the expiration, or the like. If the above-described associations are static, data indicating an indefinite term may be stored in the validity term. More than one beacon ID may be associated with one biometric information acquisition terminal ID. Although Fig. 4B illustrates a case where the beacon ID 1622 is associated with the biometric information acquisition terminal ID 1621, the present invention is not limited to such a relation of association. For example, the biometric information acquisition terminal ID 1621 may be associated with the beacon ID 1622. In such a case, more than one biometric information acquisition terminal ID may be associated with one beacon ID. In the first entry of the example shown in Fig. 4B, a biometric information acquisition terminal ID "T1" and a beacon ID "B1" are associated with each other by an indefinite validity term. In the second and third entries in the example, a biometric information acquisition terminal ID "T2" is associated with two beacon IDs "B2" and "B3" by respective predetermined validity terms. If location information based on GPS, IMES, or the like is used as the beacon ID, information stored in the beacon ID 1622 does not necessarily have to be a certain ID, but may be, for example, information indicative of a certain range.

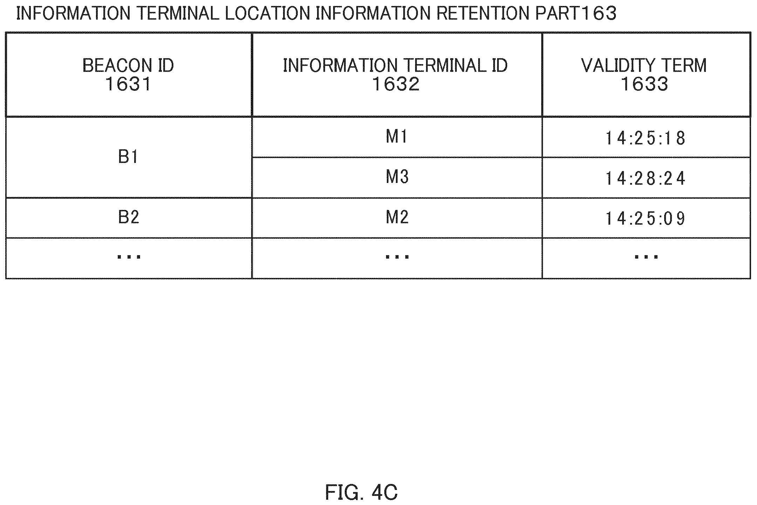

The information terminal location information retention part 163 associates and stores, for example, a beacon ID, the information terminal ID 312, and the validity term of the corresponding entry. The information terminal location information retention part 163, as an example configurational element for retaining such an association, has a beacon ID 1631, an information terminal ID 1632, and a validity term 1633. Data stored in the beacon ID 1631 are beacon IDs of devices that transmit beacons in the biometric authentication system. In this example, a functional configuration shown as the beacon ID 213 or the beacon ID 413 corresponds to the beacon ID 1631. Data stored in the information terminal ID 1632 are the information terminal IDs 312 of the information terminals 3 in the biometric authentication system. An association between the beacon ID 1631 and the information terminal ID 1632 provides a list of the information terminals 3 located near a certain apparatus transmitting the beacon ID. The information terminal 3 sends the biometric authentication server 1 a beacon ID received from another apparatus and then stored in the beacon ID retention part 313, and then the biometric authentication server 1 dynamically updates the concerned association. This will be described in detail later. Data stored in the validity term 1633 indicates the validity term of the concerned entry. Data stored as the validity term may be the time of expiration or a count number to expiration. Typically, more than one information terminal ID is associated with one beacon ID. Although Fig. 4C shows a case where the information terminal ID 1632 is associated with the beacon ID 1631, the present invention is not limited to such a relation of association. For example, the beacon ID 1631 may be associated with the information terminal ID 1632. In such a case, more than one beacon ID may be associated with one information terminal ID. In the first and second entries of the example shown in Fig. 4C, two information terminal IDs "M1" and "M3" are associated with a beacon ID "B1" with respective predetermined validity terms. If location information based on GPS, IMES, or the like is used as the beacon ID, information stored in the beacon ID 1631 does not necessarily have to be a certain ID, but may be, for example, information indicative of a certain range. In such a case, it is deemed desirable that the beacon ID 1631 be associated with the information terminal 1632, as described in the example above.

In the above example, a beacon ID near T1 is B2, and the information terminals M1 and M3 are located within a range in which B1 is receivable. Thus, a user likely to request biometric authentication processing using T1 is a user P1 or P3 that owns the information terminal 3 whose ID is M1 or M3. This enables the substantial number of N in 1:N authentication to be narrowed down from all the users. A detailed flowchart of such a case will be described later.

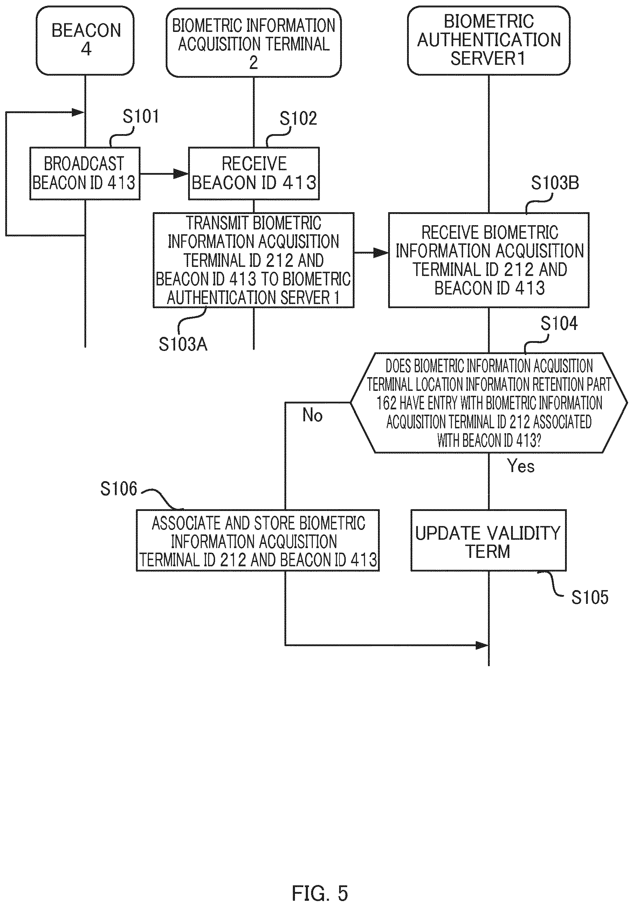

Figs. 5 to 10 are diagrams illustrating examples of processing performed by the biometric authentication system. In the following, unless otherwise noted, an operation performed by the control part 12 of the biometric authentication server 1 using the control software 111 is described simply as an operation performed by the biometric authentication server 1, an operation performed by the control part 22 of the biometric information acquisition terminal 2 using the control software 211 is described simply as an operation performed by the biometric information acquisition terminal 2, an operation performed by the control part 32 of the information terminal 3 using the control software 311 is described simply as an operation performed by the information terminal 3, and an operation performed by the control part 42 of the beacon 4 using the control software 411 is described simply as an operation performed by the beacon 4. In addition, unless otherwise noted, the biometric authentication server 1 and the biometric information acquisition terminal 2 communicate with each other via the biometric information acquisition terminal communication part 14 and the biometric authentication server communication part 24, and the biometric authentication server 1 and the information terminal 3 communicate with each other via the information terminal communication part 15 and the biometric authentication server communication part 34.

Fig. 5 illustrates an example of processing performed by the biometric authentication server 1 to update the biometric information acquisition terminal location information retention part 162 based on information received from the biometric information acquisition terminal 2. The processing is started when, for example, the beacon 4 broadcasts the beacon ID 413 from the beacon broadcast part 49 using radio signals (S101). The processing in S101 may be performed at constant or random time intervals while the beacon 4 is supplied with power, or may be initiated by other triggers occurring in software processing by the controller 41. The beacon reception part 28 of the biometric information acquisition terminal 2 receives the beacon ID 413 thus broadcasted (S102). Upon receipt of the beacon ID 413, the biometric information acquisition terminal 2 may update the beacon ID 213 based on the beacon ID 413. The radio signal from the beacon 4 is receivable within a predetermined range. When more than one biometric information acquisition terminal 2 is located within the receivable range, each of those biometric information acquisition terminals 2 performs S102 and S103 to be described below. Next, the biometric information acquisition terminal 2 transmits the biometric information acquisition terminal ID 212 and the beacon ID 213 to the biometric authentication server 1 (S103A). The data thus transmitted may also include other information, such as time information, GPS information, and radio field intensity. The biometric authentication server 1 receives the biometric information acquisition terminal ID 212 and the beacon ID 413 (S103B), and determines whether the biometric information acquisition terminal location information retention part 162 has an entry containing the received beacon ID 413 associated with the received biometric information acquisition terminal ID 212 (S104). When there is such an entry (S104: Yes), the biometric authentication server 1 updates the validity term in the entry (S105) . Updating the validity term may involve setting a next validity term if the validity term is the time, or resetting the count number to a predetermined value if the validity term is count number. If there is no such entry (S104: No), the biometric authentication server 1 associates and stores the biometric information acquisition terminal ID 212 and the beacon ID 413 as a new entry (S106). The validity term for the new entry is appropriately set. It should be noted that the series of processing illustrated in Fig. 5 may be omitted if the biometric information acquisition terminal 2 is configured not to need reception of beacons, such as when the location of the biometric information acquisition terminal 2 is fixed or when the biometric information acquisition terminal 2 itself transmits the beacon ID 213 from the beacon broadcast part 29.

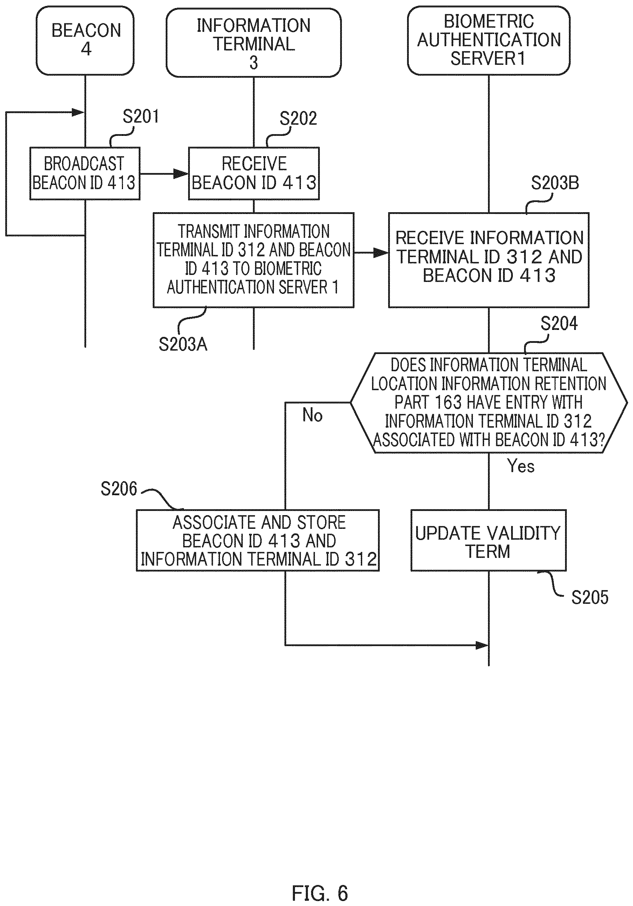

Fig. 6 illustrates an example of processing performed by the biometric authentication server 1 to update the information terminal location information retention part 163 based on information received from the information terminal 2. The processing is started when, for example, the beacon 4 transmits the beacon ID 413 from the beacon broadcast part 49 using radio signals (S201). The processing in S201 may be performed at constant or random time intervals while the beacon 4 is supplied with power, or may be initiated by other triggers occurring in software processing by the controller 41. The beacon reception part 38 of the information terminal 3 receives the beacon ID 413 thus transmitted (S202). The beacon ID 413 may be then stored in the beacon ID retention part 313. When more than one information terminal 3 is located within a range in which the radio signal from the beacon 4 is receivable, each of these information terminals 3 performs S202 and S203 to be described below. Next, the information terminal 3 transmits the information terminal ID 312 and the beacon ID 413 to the biometric authentication server 1 (S203A). The data thus transmitted may also include other information, such as time information, GPS information, and radio field intensity. The biometric authentication server 1 receives the information terminal ID 312 and the beacon ID 413 (S203B), and determines whether the information terminal location information retention part 163 has an entry containing the received beacon ID 413 associated with the received information terminal ID 312 (S204) . When there is such an entry (S204: Yes), the biometric authentication server 1 updates the validity term in the entry (S205). Updating the validity term may involve setting a next validity term if the validity term is the time, or resetting the count number to a predetermined value if the validity term is count number. If there is no such entry (S204: No), the biometric authentication server 1 associates and stores the information terminal ID 312 and the beacon ID 413 as a new entry (S206). The validity term for the new entry is appropriately set. It should be noted that S201 and S202 may be omitted if the information terminal 3 is configured not to need reception of beacons, such as when the information terminal 3 is configured to transmit location information based on GPS, IMES, or the like to the biometric authentication server 1. In such a case, the information terminal 3 executes S203 at predetermined timing. Specifically, for example, the information terminal 3 may execute S203 every predetermined time period, upon detection of entrance to a predetermined range, or in response to an operational input by a user via the input part 36.

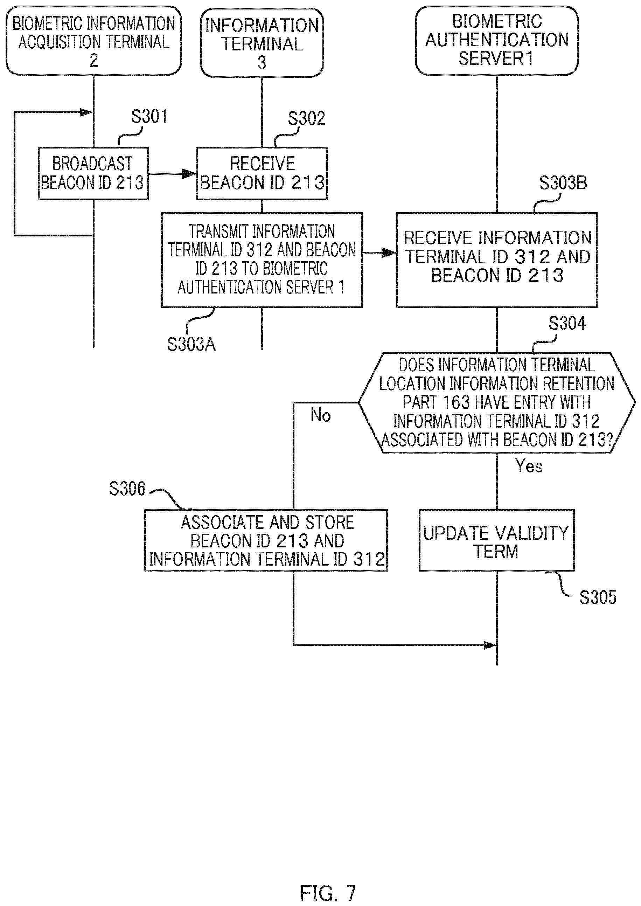

Fig. 7 illustrates an example of processing performed by the biometric authentication server 1 to update the information terminal location information retention part 163 based on information received from the information terminal 2. This processing is performed when the biometric information acquisition terminal 2 plays the role of the beacon 4, and in which case, the beacon 4 may be omitted from the configuration of the biometric authentication system. The processing is started when, for example, the biometric information acquisition terminal 2 broadcasts the beacon ID 213 from the beacon broadcast part 29 using radio signals (S301). The processing in S301 may be performed at constant or random time intervals while the biometric information acquisition terminal 2 is supplied with power, or may be initiated by other triggers occurring in software processing by the controller 21. The beacon reception part 38 of the information terminal 3 receives the beacon ID 213 thus broadcasted (S302). In this event, the information terminal 3 may store the beacon ID 213 in the beacon ID retention part 313. When more than one information terminal 3 is located within a range in which the radio signal from the biometric information acquisition terminal 4 is receivable, each of those information terminals 3 performs S302 and S303 to be described below. Next, the information terminal 3 transmits the information terminal ID 312 and the beacon ID 213 to the biometric authentication server 1 (S303A). The data thus transmitted may also include other information, such as time information, GPS information, and radio field intensity. The biometric authentication server 1 receives the information terminal ID 312 and the beacon ID 213 (S303B), and determines whether the information terminal location information retention part 163 has an entry containing the received beacon ID 213 associated with the received information terminal ID 312 (S304) . When there is such an entry (S304: Yes), the biometric authentication server 1 updates the validity term in the entry (S305). Updating the validity term may involve setting a next validity term if the validity term is the time, or resetting the count number to a predetermined value if the validity term is count number. If there is no such entry (S304: No), the biometric authentication server 1 associates and stores the information terminal ID 312 and the beacon ID 213 as a new entry (S306) . The validity term for the new entry is appropriately set. It should be noted that S301 and S302 may be omitted if the information terminal 3 is configured not to need reception of beacons, such as when the information terminal 3 is configured to transmit location information based on GPS, IMES, or the like to the biometric authentication server 1. In such a case, the information terminal 3 executes S303 at predetermined timing. Specifically, for example, the information terminal 3 may execute S303 every predetermined time period, upon detection of entrance to a predetermined range, or in response to an operational input by a user via the input part 36.

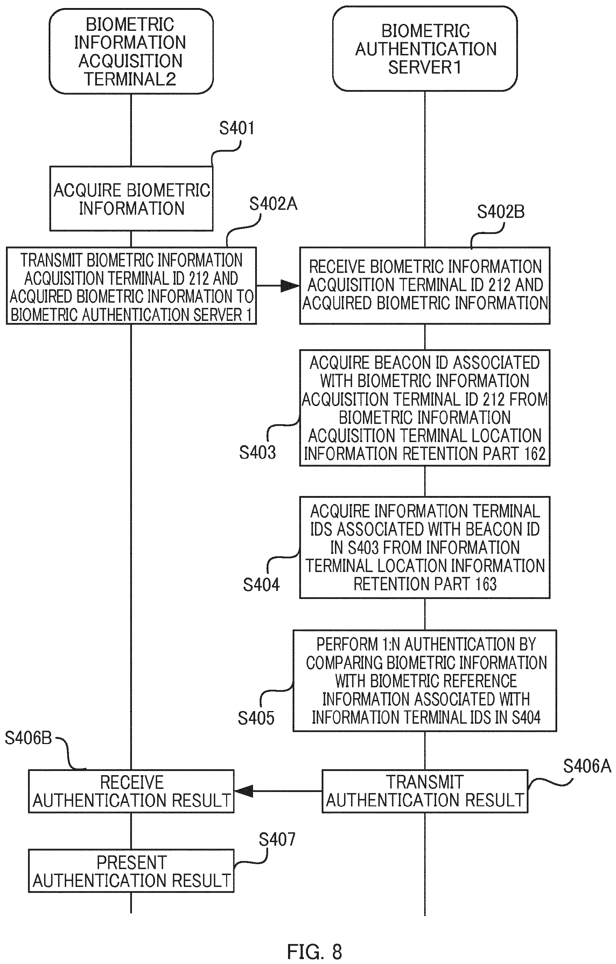

Fig. 8 illustrates an example of processing performed by the biometric authentication server 1 to perform authentication of user's biometric information acquired by the biometric information acquisition terminal 2. The processing is initiated by, for example, an input from the input part 26 of the biometric information acquisition terminal 2 or by entrance of user's biometric information into a predetermined detectable area on the biometric information acquisition part 27. The biometric information acquisition terminal 2 acquires user's biometric information through the biometric information acquisition part 27 (S401), and transmits the biometric information to the biometric authentication server 1 along with the biometric information acquisition terminal ID 212 (S402A). In this event, the entire or part of the information transmitted in S103 of Fig. 5 may be transmitted together. The transmission of the biometric information acquisition terminal ID 212 may be omitted in a case where the biometric information acquisition terminal ID 212 is obvious, such as when there is only one biometric information acquisition terminal 2 in the biometric authentication system. The biometric authentication server 1 receives the biometric information and the biometric information acquisition terminal ID 212 (S402B), and acquires, from the biometric information acquisition terminal location information retention part 162, a beacon ID associated with the biometric information acquisition terminal ID 213 (S403) . If more than one beacon ID is associated with the biometric information acquisition terminal ID 212, each of these beacon IDs is targeted in the following processing involving beacon IDs. In S403, it is desirable to check each target entry for expiration of its validity term, and a beacon ID in an entry with an expired validity term may be excluded from the following processing. Next, from the information terminal location information retention part 163, the biometric authentication server 1 acquires an information terminal ID associated with the beacon ID extracted in S403 (S404) . If more than one information terminal ID is associated with the beacon ID, each of those information terminal IDs is targeted in the following processing involving information terminal IDs. In S404, it is desirable to check each target entry for expiration of its validity term, and an information terminal ID in an entry with an expired validity term may be excluded from the following processing. Next, the biometric authentication server 1 performs authentication processing on the biometric information acquired in S402. Specifically, the biometric authentication server 1 uses biometric reference information associated with the information terminal ID extracted in S404, as a standard for comparison in the authentication processing (S405). The biometric authentication server 1 does not use biometric reference information associated with information terminal IDs not extracted in S404, as standards for comparison in the authentication processing. If more than information terminal ID is extracted in S404, 1:N authentication is employed in the authentication processing. The 1:N authentication may be performed by repetitions of 1:1 authentication. Next, the biometric authentication server 1 transmits an authentication result to the biometric information acquisition terminal 2 (S406A). The biometric information acquisition terminal 2 receives the authentication result (S406B), and may present the authentication result using the display part 25 or the like (S407) . Besides the processing in S406A and S406B, the authentication result may be used by another service within the biometric authentication server 1, or transmitted to another server or the like working in cooperation with the biometric authentication server 1, if there is such a server. Thereby, the value of N in 1:N authentication processing can be narrowed down from all users, which allows lowering of the risk of false acceptance and provision of a secure biometric authentication system.

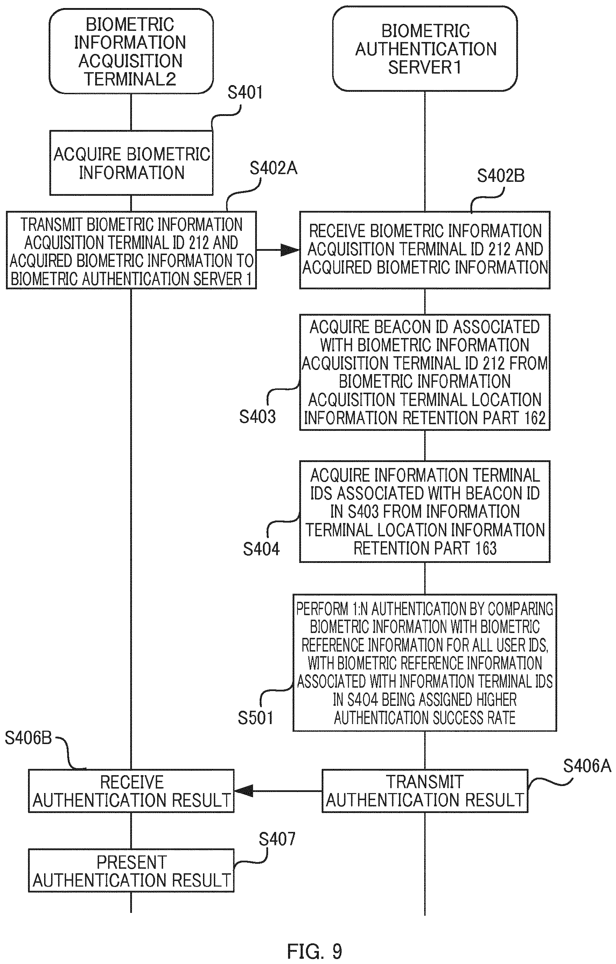

Fig. 9 illustrates another example of the processing performed by the biometric authentication server 1 to perform authentication of user's biometric information acquired by the biometric information acquisition terminal 2. Steps that are the same as those in Fig. 8 are denoted by the same numbers and not described. After S404, the biometric authentication server 1 performs authentication processing on the biometric information received in S402B. The authentication processing is performed against the biometric reference information on all user IDs with biometric reference information associated with the information terminal ID extracted in S404 being given higher authentication success rate (S501). Since more than one user is naturally registered, 1:N authentication is employed as the authentication processing. The 1:N authentication may be performed by repetitions of 1:1 authentication. Methods of increasing the authentication success rate include increasing the degree of match in the comparison between biometric information and biometric reference information, if the biometric reference information is one associated with the information terminal ID extracted in S404. Other methods may be employed, such as appropriately changing the probability distribution in matching processing. Alternatively, the success rate may be changed based on other additional information. For example, if the biometric authentication server 1 can acquire the radio field strength detected by the information terminal 3 when receiving the beacon ID 213 broadcasted by the biometric information acquisition terminal 2, the biometric authentication server 1 may set a higher success rate for the information terminal 3 with higher radio field strength, since it is presumable that the higher the radio field strength, the closer the information terminal 3 is to the biometric information acquisition terminal 2. Thereby, the risk of false acceptance can be reduced compared to performing authentication equally on all the users in the 1:N authentication processing, allowing provision of a highly secure biometric authentication system.

In the branching steps in the flowcharts illustrated in Figs . 5 to 9 where a decision is made using a beacon ID, information used as a beacon ID does not have to be an ID. For example, if location information based on GPS or IMES is used, a decision in a branching step is desirably made based on whether a value indicated by the location information falls within a certain range. However, the flowcharts do not necessarily have to be changed accordingly, and the present invention is still effective when the flowcharts are used without any change.

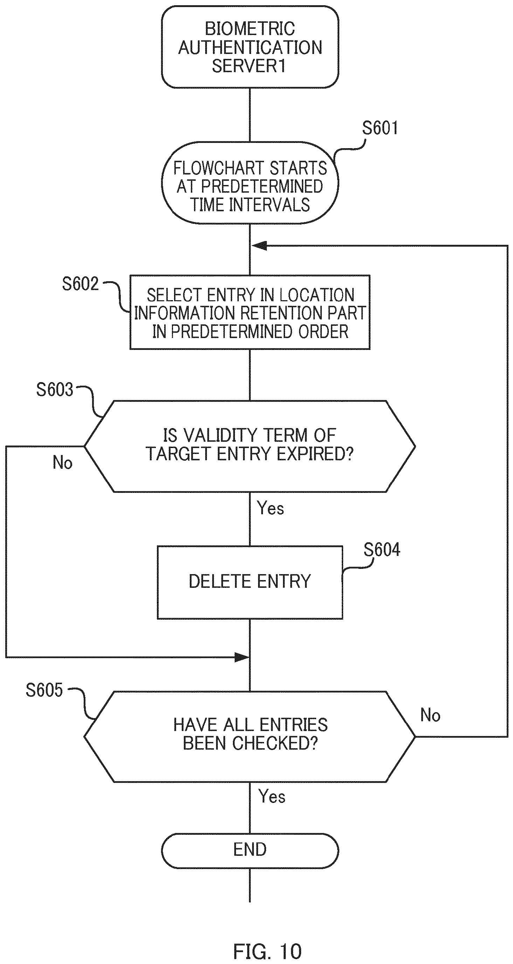

Fig. 10 illustrates an example of processing performed by the biometric authentication server 1 to perform information update based on validity terms, by checking the validity term of the location information on the biometric information acquisition terminal 2 or the information terminal 3. In the following description using Fig. 10, the biometric information acquisition terminal location information retention part 162 and the information terminal location information retention part 163 are called a location information retention part without any distinction. This processing may be performed by the biometric authentication server 1 at, for example, predetermined time intervals (S601) . The processing may also be initiated by other triggers. For example, the processing may be triggered by S103, S203, S303, or the like, by other communications from the biometric information acquisition terminal communication part 14 or the information terminal communication part 15, or when it is found through S403 and S404 that there is an entry with an expired validity term. First, the biometric authentication server 1 selects an entry in an order predetermined for the location information retention part (S602) . Any order may be adopted as long as all the entries are covered. Entry can be numbered and selected in lexicographical order, or if entries are in a list form, the entries may be selected from the first one to the last one sequentially. Next, the biometric authentication server 1 checks if the entry selected has an expired validity term (S603), and if it does (S603: Yes), the biometric authentication server 1 deletes the entry from the location information retention part (S604) and proceeds to S605. If the entry does not have an expired validity term (S603: No), the biometric authentication server 1 determines whether all the entries have been selected (S605) . The biometric authentication server 1 ends the processing if all the entries have been selected (S605: Yes), or otherwise (S605: No), continues the processing by proceeding back to S602. The validity term checking method is not limited to the one above . For example, if the control software 111 can receive a notification when the validity term for a certain entry has expired, the biometric authentication server 1 may delete the entry upon receipt of the notification. Thus, if a user carrying the information terminal 3 moves away from the biometric information storage terminal 2, the biometric information on the user can be appropriately excluded from the authentication processing or can not be targeted for the processing of increasing the authentication success rate therefor.

Should any error occur during any of the flowcharts in the present invention, a notification of the error may be issued to the control part of each of the constituents, although this is not described in the flowcharts in detail.

Using the display part 25 or the display part 35, the control software 211 and the control software 311 may, if necessary, notify users of processing in execution, although this is not described in the flowcharts in detail. In particular, it is desirable that a user be notified of processing completion or branching via the display part, and the user may be asked to make a decision for the branching using the input part 26 or input part 36.

In addition, although the flowcharts omit information exchange between steps, the steps may actually form a command-response pair. Even when information exchange between certain steps is shown with a single bidirectional arrow, the exchange may include more than one command/response exchange. In addition, even when a communication between a terminal and a server is described in such a manner that the server transmits data to the terminal (a client) and the terminal then receives the data, the communication may actually be carried out by a command/response exchange between the client and the server, implementing the above-described data transmission as a result.

It should be noted that the present invention is not limited to each embodiment described above, and include various modifications thereof. For example, each embodiment described above is given in a detailed manner in order to facilitate understanding of the present invention, and the present invention does not necessarily have to include all the configurations described above. Moreover, part of a configuration in a certain embodiment may be replaced by a configuration in another embodiment, or a configuration in a certain embodiment may be added to a configuration of another embodiment. Further, part of a configuration in each embodiment may be added to another configuration, deleted, or replaced with another configuration.

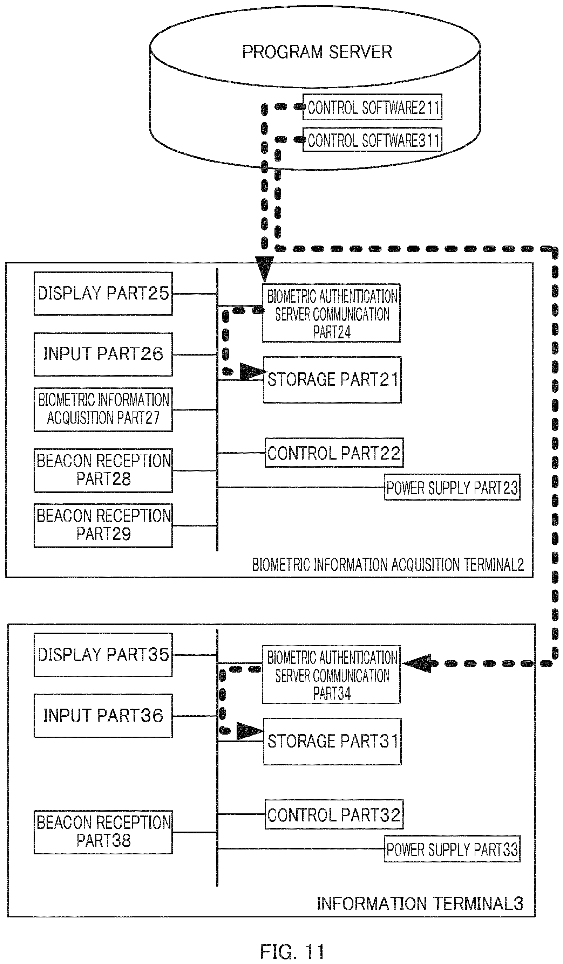

Some or all of the configurations, functions, processing parts, processing means, and the like described above may be implemented by hardware using, for example, an integrated circuit designed to implement them. The configurations, functions, and the like described above may be implemented by software when a processor interprets and executes programs for implementing the respective functions. Information used for the implementation of each function, such as programs, tables, and files may be stored in a recording device such as a memory, a hard disk, or an SSD (Solid State Drive) or a recording medium such as an IC card, an SD card, or a DVD. As shown in Fig. 11, programs or the like for implementing the functions may be copied to a server or the like and provided to the biometric information acquisition terminal 2, the information terminal 3, and other terminals, apparatuses, and devices via wired or wireless communication lines or the like. In such a case, a user can operate a terminal or the like to download and install a necessary program and the like from the server or the like into the storage part of the terminal or the like.

Control lines and information lines illustrated are ones that are deemed necessary for the purpose of illustration. All the control lines and information lines necessary as products are not necessarily illustrated. Actually, almost all the configurations may be interconnected.

### [Reference Signs List]

- 1: biometric authentication server
- 2: biometric information acquisition terminal
- 3: information terminal
- 4: beacon

## Claims

1. A biometric authentication system comprising
a biometric authentication processing apparatus;
an information terminal (3) that has ID information; and
a biometric information acquisition terminal (2) that acquires biometric information, wherein:
the biometric authentication processing apparatus comprises:
a first communication part that communicates with the information terminal (3) and thereby acquires ID information and location information on the information terminal (3);
a second communication part that communicates with the biometric information acquisition terminal (2) and thereby acquires the biometric information;
a location information storage part that stores therein an indication whether the information terminal (3) having the ID information and the biometric information acquisition terminal (2) are located within a predetermined range;
a biometric reference information storage part that associates and stores the ID information and biometric reference information to be used for comparison in biometric authentication; and
a control part that controls these parts, and
the control part controls the following operations:
acquiring the ID information and the location information indicating a location of the information terminal (3) using the first communication part,
when the location information indicates that the information terminal (3) is within a predetermined range from the biometric information acquisition terminal (2), storing, in the location information storage part, the indication that the information terminal (3) and the biometric information acquisition terminal (2) are located within the predetermined range, and
upon acquisition of the biometric information from the second communication part, performing a comparison process on the biometric information using the biometric reference information stored in the biometric reference information storage part in association with the ID information on the information terminal (3),
wherein the biometric information acquisition terminal (2) comprises a beacon broadcast part (29);
wherein the information terminal (3) comprises a beacon reception part (38);
wherein the beacon broadcast part (29) is configured to enable the biometric information acquisition terminal (2) to give a notification of location-related information to the information terminal (3);
wherein the beacon reception part (38) is configured to enable the information terminal (3) to acquire said location-related information;
wherein the beacon broadcast part (29) broadcasts radio waves of close-range communication;
wherein the beacon reception part (38) receives radio waves of close-range communication or proximity communication; and
wherein the biometric authentication processing apparatus performs the comparison process on the biometric information against every biometric reference information stored in the biometric reference information storage part, calculates a score for the comparison process based on a degree of match in the comparison, and performs a predetermined alteration process on the score if the location information storage part indicates that the information terminal (3) and the biometric information acquisition terminal (2) are located within the predetermined range.

2. The biometric authentication system according to claim 1, wherein: in the biometric authentication system, the information terminal generates the location information based on information that the information terminal receives wirelessly.

3. The biometric information system of claim 1, wherein the biometric information acquisition terminal (2) comprises:
a biometric authentication server communication part that communicates with a biometric authentication processing apparatus;
a biometric information acquisition part that acquires biometric information;
a biometric-information-acquisition-terminal control part that controls these parts,
wherein the biometric-information-acquisition-terminal control part is configured to control the following operations:
acquiring biometric information from the biometric information acquisition part,
transmitting the biometric information to the biometric authentication processing apparatus using the biometric authentication server communication part, and
acquiring an authentication result using the biometric authentication server communication part.

4. The biometric information system of claim 1, wherein the information terminal (3) comprises:
an information-terminal biometric authentication server communication part that communicates with a biometric authentication processing apparatus;
an information-terminal storage part that stores ID information on the information terminal (3);
a location information acquisition part that acquires location information; and
an information-terminal control part that controls these parts;
wherein the information-terminal control part is configured to control transmission of the ID information and location information acquired using the location information acquisition part to the biometric authentication processing apparatus using the information-terminal biometric authentication server communication part.

5. The biometric information system of claim 1,
wherein the information terminal ID information comprises a validity term, and
wherein an information terminal ID information with an expired validity term is excluded from the comparison process.

6. A biometric authentication method performed by a biometric authentication processing apparatus using an information terminal that has ID information and a biometric information acquisition terminal that acquires biometric information, wherein the biometric authentication processing apparatus executes the steps of:
communicating with the information terminal and thereby acquiring the ID information and location information on the information terminal;
communicating with the biometric information acquisition terminal and thereby acquiring the biometric information;
when the location information indicates that the information terminal is within the predetermined range from the biometric information acquisition terminal, storing in a location information storage part an indication that the information terminal and the biometric information acquisition terminal are located within the predetermined range;
associating and storing , in a biometric reference information storage part, the ID information and biometric reference information to be used for comparison in biometric authentication;
and
upon acquisition of the biometric information, performing a comparison process on the biometric information using the biometric reference information associated with the ID information on the information terminal;
wherein the biometric information acquisition terminal (2) comprises a beacon broadcast part (29);
wherein the information terminal (3) comprises a beacon reception part (38);
wherein the beacon broadcast part (29) is configured to enable the biometric information acquisition terminal (2) to give a notification of location-related information to the information terminal (3);
wherein the beacon reception part (38) is configured to enable the information terminal (3) to acquire said location-related information;
wherein the beacon broadcast part (29) broadcasts radio waves of close-range communication;
wherein the beacon reception part (38) receives radio waves of close-range communication or proximity communication; and
wherein the biometric authentication processing apparatus performs the comparison process on the biometric information against every biometric reference information stored in the biometric reference information storage part, calculates a score for the comparison process based on a degree of match in the comparison, and performs a predetermined alteration process on the score if the location information storage part indicates that the information terminal (3) and the biometric information acquisition terminal (2) are located within the predetermined range.

## Patentansprüche

1. System zur biometrischen Authentifizierung, das Folgendes umfasst:
eine Vorrichtung zur biometrischen Authentifizierungsverarbeitung;
ein Informationenendgerät (3), das ID-Informationen aufweist; und
ein Endgerät zur Erfassung biometrischer Informationen (2), das biometrische Informationen erfasst, wobei:
die Vorrichtung zur biometrischen Authentifizierungsverarbeitung Folgendes umfasst:
einen ersten Kommunikationsteil, der mit dem Informationenendgerät (3) kommuniziert und dadurch ID-Informationen und Standortinformationen auf dem Informationenendgerät (3) erfasst;
einen zweiten Kommunikationsteil, der mit dem Endgerät zur Erfassung biometrischer Informationen (2) kommuniziert und dadurch die biometrischen Informationen erfasst;
einen Standortinformationenspeicherteil, der darin einen Hinweis speichert, ob sich das Informationenendgerät (3) mit den ID-Informationen und das Endgerät zur Erfassung biometrischer Informationen (2) innerhalb eines vorbestimmten Bereichs befinden;
einen biometrischen Referenzinformationen-Speicherteil, der die ID-Informationen und biometrischen Referenzinformationen, die zum Vergleich bei der biometrischen Authentifizierung verwendet werden sollen, zuordnet und speichert; und
einen Steuerteil, der diese Teile steuert, und
der Steuerteil die folgenden Vorgänge steuert:
das Erfassen der ID-Informationen und der Standortinformationen, die einen Standort des Informationenendgeräts (3) anzeigen, unter Verwendung des ersten Kommunikationsteils,
wenn die Standortinformationen anzeigen, dass sich das Informationenendgerät (3) innerhalb eines vorbestimmten Bereichs von dem Endgerät zur Erfassung biometrischer Informationen (2) befindet, das Speichern des Hinweises, dass sich das Informationenendgerät (3) und das Endgerät zur Erfassung biometrischer Informationen (2) innerhalb des vorbestimmten Bereichs befinden, in dem Standortinformationenspeicherteil und
bei der Erfassung der biometrischen Informationen durch den zweiten Kommunikationsteil das Durchführen eines Vergleichsvorgangs mit den biometrischen Informationen unter Verwendung der biometrischen Referenzinformationen, die in dem biometrischen Referenzinformationen-Speicherteil in Zuordnung mit den ID-Informationen auf dem Informationenendgerät (3) gespeichert sind,
wobei das Endgerät zur Erfassung biometrischer Informationen (2) einen Funkbaken-Senderteil (29) umfasst;
wobei das Informationenendgerät (3) einen Funkbaken-Empfangsteil (38) umfasst;
wobei der Funkbaken-Senderteil (29) konfiguriert ist, um zu ermöglichen, dass das Endgerät zur Erfassung biometrischer Informationen (2) eine Benachrichtigung über standortbezogene Informationen an das Informationenendgerät (3) weitergibt;
wobei der Funkbaken-Empfangsteil (38) konfiguriert ist, um zu ermöglichen, dass das Informationenendgerät (3) die standortbezogenen Informationen erfasst;
wobei der Funkbaken-Senderteil (29) Funkwellen einer Nahbereichskommunikation aussendet;
wobei der Funkbaken-Empfangsteil (38) Funkwellen der Nahbereichskommunikation oder Nahkommunikation empfängt; und
wobei die Vorrichtung zur biometrischen Authentifizierungsverarbeitung den Vergleichsvorgang an biometrischen Informationen mit allen biometrischen Referenzinformationen durchführt, die in dem biometrischen Referenzinformationen-Speicherteil gespeichert sind, einen Wert für den Vergleichsvorgang basierend auf einem Übereinstimmungsgrad bei dem Vergleich berechnet und einen vorbestimmten Änderungsvorgang des Werts durchführt, wenn der Standortinformationenspeicherteil anzeigt, dass sich das Informationenendgerät (3) und das Endgerät zum Erfassen biometrischer Informationen (2) innerhalb des vorbestimmten Bereichs befinden.

2. System zur biometrischen Authentifizierung nach Anspruch 1, wobei das Informationenendgerät die Standortinformationen in dem System zur biometrischen Authentifizierung basierend auf Informationen erzeugt, die das Informationenendgerät drahtlos empfängt.

3. System biometrischer Informationen nach Anspruch 1, wobei das Endgerät zur Erfassung biometrischer Informationen (2) Folgendes umfasst:
einen Serverkommunikationsteil zur biometrischen Authentifizierung, der mit einer Vorrichtung zur biometrischen Authentifizierungsverarbeitung kommuniziert;
einen Teil zur Erfassung biometrischer Informationen, der biometrische Informationen erfasst;
einen Teil zur Steuerung des Endgeräts zur Erfassung biometrischer Informationen, der diese Teile steuert,
wobei der Teil zur Steuerung des Endgeräts zur Erfassung biometrischer Informationen konfiguriert ist, um die folgenden Vorgänge zu steuern:
das Erfassen von biometrischen Informationen von dem Teil zur Erfassung biometrischer Informationen,
das Senden der biometrischen Informationen an die Vorrichtung zur biometrischen Authentifizierungsverarbeitung unter Verwendung des Serverkommunikationsteils zur biometrischen Authentifizierung und
das Erfassen eines Authentifizierungsergebnisses unter Verwendung des Serverkommunikationsteils zur biometrischen Authentifizierung.

4. System biometrischer Informationen nach Anspruch 1, wobei das Informationenendgerät (3) Folgendes umfasst:
einen Informationenendgerät-Serverkommunikationsteil zur biometrischen Authentifizierung, der mit einer Vorrichtung zur biometrischen Authentifizierungsverarbeitung kommuniziert;
einen Informationenendgerät-Speicherteil, der ID-Informationen auf dem Informationenendgerät (3) speichert;
einen Standortinformationenerfassungsteil, der Standortinformationen erfasst; und
einen Informationenendgerät-Steuerteil, der diese Teile steuert;
wobei der Informationenendgerät-Steuerteil konfiguriert ist, um das Senden der ID-Informationen und Standortinformationen, die unter Verwendung des Standortinformationenerfassungsteils erfasst wurden, an die Vorrichtung zur biometrischen Authentifizierungsverarbeitung unter Verwendung des Informationenendgerät-Serverkommunikationsteils zur biometrischen Authentifizierung zu steuern.

5. System biometrischer Informationen nach Anspruch 1,
wobei die Informationenendgerät-ID-Informationen eine Gültigkeitsdauer umfassen und
wobei Informationenendgerät-ID-Informationen mit einer abgelaufenen Gültigkeitsdauer von dem Vergleichsvorgang ausgeschlossen ist.

6. Verfahren zur biometrischen Authentifizierung, das von einer Vorrichtung zur biometrischen Authentifizierungsverarbeitung unter Verwendung eines Informationenendgeräts, das ID-Informationen aufweist, und eines Endgeräts zur Erfassung biometrischer Informationen, das biometrische Informationen erfasst, durchgeführt wird, wobei die Vorrichtung zur biometrischen Authentifizierungsverarbeitung die folgenden Schritte ausführt:
das Kommunizieren mit dem Informationenendgerät und dadurch das Erfassen der ID-Informationen und Standortinformationen auf dem Informationenendgerät;
das Kommunizieren mit dem Endgerät zur Erfassung biometrischer Informationen und dadurch das Erfassen der biometrischen Informationen;
wenn die Standortinformationen anzeigen, dass sich das Informationenendgerät innerhalb des vorbestimmten Bereichs von dem Endgerät zur Erfassung biometrischer Informationen befindet, das Speichern eines Hinweises, dass sich das Informationenendgerät und das Endgerät zur Erfassung biometrischer Informationen innerhalb des vorbestimmten Bereichs befinden, in dem Standortinformationenspeicherteil;
das Zuordnen und Speichern der ID-Informationen und biometrischen Referenzinformationen, die zum Vergleich bei der biometrischen Authentifizierung verwendet werden sollen, in einem biometrischen Referenzinformationen-Speicherteil;
bei der Erfassung der biometrischen Informationen das Durchführen eines Vergleichsvorgangs mit den biometrischen Informationen unter Verwendung der biometrischen Referenzinformationen, die den ID-Informationen auf dem Informationenendgerät zugeordnet sind;
wobei das Endgerät zur Erfassung biometrischer Informationen (2) einen Funkbaken-Senderteil (29) umfasst;
wobei das Informationenendgerät (3) einen Funkbaken-Empfangsteil (38) umfasst;
wobei der Funkbaken-Senderteil (29) konfiguriert ist, um zu ermöglichen, dass das Endgerät zur Erfassung biometrischer Informationen (2) eine Benachrichtigung über standortbezogene Informationen an das Informationenendgerät (3) weitergibt;
wobei der Funkbaken-Empfangsteil (38) konfiguriert ist, um zu ermöglichen, dass das Informationenendgerät (3) die standortbezogenen Informationen erfasst;
wobei der Funkbaken-Senderteil (29) Funkwellen der Nahbereichskommunikation aussendet;
wobei der Funkbaken-Empfangsteil (38) Funkwellen der Nahbereichskommunikation oder Nahkommunikation empfängt; und
wobei die Vorrichtung zur biometrischen Authentifizierungsverarbeitung den Vergleichsvorgang der biometrischen Informationen mit allen biometrischen Referenzinformationen durchführt, die in dem biometrischen Referenzinformationen-Speicherteil gespeichert sind, einen Wert für den Vergleichsvorgang basierend auf einem Übereinstimmungsgrad bei dem Vergleich berechnet und einen vorbestimmten Änderungsvorgang des Werts durchführt, wenn der Standortinformationenspeicherteil anzeigt, dass sich das Informationenendgerät (3) und das Endgerät zum Erfassen biometrischer Informationen (2) innerhalb des vorbestimmten Bereichs befinden.

## Revendications

1. Système d'authentification biométrique, comprenant :
un appareil de traitement d'authentification biométrique ;
un terminal d'informations (3) qui présente des informations d'identification, ID ; et
un terminal d'acquisition d'informations biométriques (2) qui acquiert des informations biométriques, dans lequel :
l'appareil de traitement d'authentification biométrique comprend :
une première partie de communication qui communique avec le terminal d'informations (3) et acquiert par conséquent des informations d'identification et des informations de localisation sur le terminal d'informations (3) ;
une seconde partie de communication qui communique avec le terminal d'acquisition d'informations biométriques (2) et acquiert par conséquent les informations biométriques ;
une partie de stockage d'informations de localisation qui stocke dans celle-ci une indication indiquant si le terminal d'informations (3) présentant les informations d'identification, et le terminal d'acquisition d'informations biométriques (2), sont situés dans une plage prédéterminée ;
une partie de stockage d'informations de référence biométriques qui associe et stocke les informations d'identification et les informations de référence biométriques à utiliser à des fins de comparaison dans le cadre d'une authentification biométrique ; et
une partie de commande qui commande ces parties ; et
la partie de commande commande les opérations ci-dessous consistant à :
acquérir les informations d'identification et les informations de localisation indiquant un emplacement du terminal d'informations (3), en utilisant la première partie de communication ;
lorsque les informations de localisation indiquent que le terminal d'informations (3) se situe dans une plage prédéterminée par rapport au terminal d'acquisition d'informations biométriques (2), stocker, dans la partie de stockage d'informations de localisation, l'indication indiquant que le terminal d'informations (3) et le terminal d'acquisition d'informations biométriques (2) sont situés dans la plage prédéterminée ; et
suite à l'acquisition des informations biométriques à partir de la seconde partie de communication, mettre en œuvre un processus de comparaison sur les informations biométriques, en utilisant les informations de référence biométriques stockées dans la partie de stockage d'informations de référence biométriques en association avec les informations d'identification sur le terminal d'informations (3) ;
dans lequel le terminal d'acquisition d'informations biométriques (2) comprend une partie de diffusion de balise (29) ;
dans lequel le terminal d'informations (3) comprend une partie de réception de balise (38) ;
dans lequel la partie de diffusion de balise (29) est configurée de manière à permettre au terminal d'acquisition d'informations biométriques (2) de transmettre une notification d'informations connexes à l'emplacement au terminal d'informations (3) ;
dans lequel la partie de réception de balise (38) est configurée de manière à permettre au terminal d'informations (3) d'acquérir lesdites informations connexes à l'emplacement ;
dans lequel la partie de diffusion de balise (29) diffuse des ondes radio de communication à courte portée ;
dans lequel la partie de réception de balise (38) reçoit des ondes radio de communication à courte portée ou de communication de proximité ; et
dans lequel l'appareil de traitement d'authentification biométrique met en œuvre le processus de comparaison sur les informations biométriques par rapport à toutes les informations de référence biométriques stockées dans la partie de stockage d'informations de référence biométriques, calcule un score pour le processus de comparaison sur la base d'un degré de correspondance dans la comparaison, et met en œuvre un processus de modification prédéterminé sur le score si la partie de stockage d'informations de localisation indique que le terminal d'informations (3) et le terminal d'acquisition d'informations biométriques (2) sont situés dans la plage prédéterminée.

2. Système d'authentification biométrique selon la revendication 1, dans lequel :
dans le système d'authentification biométrique, le terminal d'informations génère les informations de localisation sur la base d'informations que le terminal d'informations reçoit par voie hertzienne.

3. Système d'authentification biométrique selon la revendication 1, dans lequel le terminal d'acquisition d'informations biométriques (2) comprend :
une partie de communication de serveur d'authentification biométrique qui communique avec un appareil de traitement d'authentification biométrique ;
une partie d'acquisition d'informations biométriques qui acquiert des informations biométriques ;
une partie de commande de terminal d'acquisition d'informations biométriques qui commande ces parties ;
dans lequel la partie de commande de terminal d'acquisition d'informations biométriques est configurée de manière à commander les opérations ci-dessous consistant à :
acquérir des informations biométriques à partir de la partie d'acquisition d'informations biométriques ;
transmettre les informations biométriques, à l'appareil de traitement d'authentification biométrique, en utilisant la partie de communication de serveur d'authentification biométrique ; et
acquérir un résultat d'authentification en utilisant la partie de communication de serveur d'authentification biométrique.

4. Système d'authentification biométrique selon la revendication 1, dans lequel le terminal d'informations (3) comprend :
une partie de communication de serveur d'authentification biométrique de terminal d'informations qui communique avec un appareil de traitement d'authentification biométrique ;
une partie de stockage de terminal d'informations qui stocke des informations d'identification sur le terminal d'informations (3) ;
une partie d'acquisition d'informations de localisation qui acquiert des informations de localisation ; et
une partie de commande de terminal d'informations qui commande ces parties ;
dans lequel la partie de commande de terminal d'informations est configurée de manière à commander la transmission des informations d'identification et d'informations de localisation acquises en utilisant la partie d'acquisition d'informations de localisation, à l'appareil de traitement d'authentification biométrique, en utilisant la partie de communication de serveur d'authentification biométrique de terminal d'informations.

5. Système d'authentification biométrique selon la revendication 1,
dans lequel les informations d'identification de terminal d'informations comprennent un terme de validité ; et
dans lequel des informations d'identification de terminal d'informations avec un terme de validité expiré sont exclues du processus de comparaison.

6. Procédé d'authentification biométrique mis en œuvre par un appareil de traitement d'authentification biométrique utilisant un terminal d'informations qui présente des informations d'identification et un terminal d'acquisition d'informations biométriques qui acquiert des informations biométriques, dans lequel l'appareil de traitement d'authentification biométrique exécute les étapes ci-dessous consistant à :
communiquer avec le terminal d'informations et acquérir par conséquent les informations d'identification et des informations de localisation sur le terminal d'informations ;
communiquer avec le terminal d'acquisition d'informations biométriques et acquérir par conséquent les informations biométriques ;
lorsque les informations de localisation indiquent que le terminal d'informations se situe dans la plage prédéterminée par rapport au terminal d'acquisition d'informations biométriques, stocker, dans une partie de stockage d'informations de localisation, une indication indiquant que le terminal d'informations et le terminal d'acquisition d'informations biométriques sont situés dans la plage prédéterminée ;
associer et stocker, dans une partie de stockage d'informations de référence biométriques, les informations d'identification et les informations de référence biométriques à utiliser à des fins de comparaison dans le cadre d'une authentification biométrique ;
suite à l'acquisition des informations biométriques, mettre en œuvre un processus de comparaison sur les informations biométriques, en utilisant les informations de référence biométriques associées aux informations d'identification sur le terminal d'informations ;
dans lequel le terminal d'acquisition d'informations biométriques (2) comprend une partie de diffusion de balise (29) ;
dans lequel le terminal d'informations (3) comprend une partie de réception de balise (38) ;
dans lequel la partie de diffusion de balise (29) est configurée de manière à permettre au terminal d'acquisition d'informations biométriques (2) de transmettre une notification d'informations connexes à l'emplacement au terminal d'informations (3) ;
dans lequel la partie de réception de balise (38) est configurée de manière à permettre au terminal d'informations (3) d'acquérir lesdites informations connexes à l'emplacement ;
dans lequel la partie de diffusion de balise (29) diffuse des ondes radio de communication à courte portée ;
dans lequel la partie de réception de balise (38) reçoit des ondes radio de communication à courte portée ou de communication de proximité ; et
dans lequel l'appareil de traitement d'authentification biométrique met en œuvre le processus de comparaison sur les informations biométriques par rapport à toutes les informations de référence biométriques stockées dans la partie de stockage d'informations de référence biométriques, calcule un score pour le processus de comparaison sur la base d'un degré de correspondance dans la comparaison, et met en œuvre un processus de modification prédéterminé sur le score, si la partie de stockage d'informations de localisation indique que le terminal d'informations (3) et le terminal d'acquisition d'informations biométriques (2) sont situés dans la plage prédéterminée.
